# EUROPEAN PATENT SPECIFICATION

(11) **EP 3 251 758 B1**
(45) Date of publication and mention of the grant of the patent: **12.12.2018**
(21) Application number: 16742963.8
(22) Date of filing: 25.01.2016
(51) Int. Cl.: B05D 7/14, B05D 3/02, B32B 15/085, B32B 27/32

(54) **METHOD FOR PRODUCING COATED METAL STRIP**
VERFAHREN ZUR HERSTELLUNG EINES BESCHICHTETEN METALLSTREIFENS
PROCÉDÉ DE PRODUCTION DE BANDE MÉTALLIQUE REVÊTUE

(30) Priority: 29.01.2015 JP 2015015414
(43) Date of publication of application: 06.12.2017
(73) Proprietor: Nisshin Steel Co., Ltd., Chiyoda-ku Tokyo 100-8366 (JP)
(72) Inventor: MORIKAWA, Shigeyasu, Tokyo 100-8366 (JP); FUJII, Takahiro, Tokyo 100-8366 (JP)
(74) Representative: Epping - Hermann - Fischer
(86) International application number: PCT/JP2016/000340
(87) International publication number: WO 2016/121359

(56) References cited:
- WO-A1-2014/111978
- JP-A- H1 034 070
- JP-A- H09 299 876
- JP-A- 2003 266 017
- JP-A- 2014 159 125

## Description

### Technical Field

The present invention relates to a method for producing a coated metal strip which is a metal strip having a coating formed on at least one surface thereof, and the coating is a part to be joined to a molded article of a thermoplastic resin composition.

### Background Art

Metal strips, metal sheets, press-molded articles made of a metal strip or metal sheet, or so-called "shaped metal materials," which are molded articles formed by casting, forging, cutting, powder metallurgy or the like, are components essential for producing various industrial products, such as automobiles. Composites produced by joining a shaped metal material and a molded article of a resin composition to each other are lighter than a component made solely of a metal and, on the other hand, is stronger than a component made solely of a resin. Such composites are used in electronic devices, such as cellular phones and personal computers.

As described above, a composite is produced by joining a shaped metal material and a molded article of a resin composition to each other. Therefore, important is a high adhesion between the shaped metal material and the molded article of a resin composition being joined to each other. In recent years, there is proposed a method for producing a composite which enables a shaped metal material and a molded article of a resin composition to be joined with high adhesion (see, e.g., PTL 1).

In the method described in PTL 1 for producing a composite, firstly, a coated shaped metal material is provided. The coated shaped metal material is a shaped metal material having, on the surface thereof, a coating containing an acid-modified polypropylene and having a thickness of 0.2 µm or more. Next, the provided coated shaped metal material is inserted into an injection molding die, and a thermoplastic resin composition having a molding shrinkage of 1.1% or lower is injected into the injection molding die to join a molded article of the thermoplastic resin composition to the surface of the coated shaped metal material. Accordingly, in the composite described in PTL 1, the coated shaped metal material and the molded article of the thermoplastic resin composition can be joined with high adhesion. Working examples of PTL 1 describe a composite obtained by using a metal sheet as a shaped metal material, and show that a coated metal sheet and a molded article of a thermoplastic resin composition can be joined with high adhesion.

PTL 2 discloses a method of running a metal strip having a coating formed on at least one surface thereof. Two cooling devices as well as drying ovens defining several heating zones at different temperatures are disclosed. The coating applied is an aqueous acrylic resin dispersion. While the main focus of PTL 2 is the alkali resistance of the metal strip, also adhesion and blocking resistance are discussed.

PTL 3 discloses a method for producing a coated shaped metal material exhibiting the similar chemical and physical characteristics, i.e. employing an acid-modified polypropylene. However, PTL 3 does not employ any winding or coiling and thus does not require any cold application to match the thermal expansion of both, resin and metal to the final, cooled state during liquid application.

### Citation List

### Patent Literature

PTL 1: Japanese Patent Application Laid-Open No.2014-159125
PTL 2: Japanese Patent Application Laid-Open No. H09-299876
PTL 3: WO 2014/111978 A1

### Summary of Invention

### Technical Problem

With respect to the coated shaped metal material as described above, a metal strip which needs winding is sometimes used as a base material instead of a metal sheet which does not need winding. In this case, during the production of a coated metal strip (coated shaped metal material), it becomes necessary to continuously perform a pretreatment and coating formation to the surface of a running metal strip, followed by winding of the resultant coated metal strip. However, when a coated metal strip is produced in a manner as described in PTL 1, there are problems such as unsatisfactory adhesion between the metal strip and the coating, and occurrence of a phenomenon (blocking) in which adjacent coated metal strips adhere to each other in a coil after the winding.

An object of the present invention is to provide a method for producing a coated metal strip which is a metal strip having a coating formed on at least one surface thereof, and the coating is a part to be joined strongly to a molded article of a thermoplastic resin composition. The method enables the production of a coated metal strip which is excellent in adhesion between the metal strip and the coating and which is less likely to suffer blocking.

### Solution to Problem

The present inventors have found that the above object can be achieved by adjusting the temperature of a metal strip during the application of a coating material and the temperature of a coated metal strip during the winding so that each temperature falls within a predetermined range, and conducted further studies to complete the present invention.

Specifically, the present invention relates to the following method for producing a coated metal strip.
[1] A method for producing a coated metal strip which is a metal strip having a coating formed on at least one surface thereof, the coating being a part to be joined to a molded article of a thermoplastic resin composition, the method including: running a metal strip; applying onto the running metal strip a coating material containing an acid-modified polypropylene, the coating material containing 5 mass% or more of a nonvolatile component, in which the coating material is applied in a state where a surface temperature of the running metal strip is 60°C or lower; baking, at a temperature of from 80 to 250°C, the coating material applied onto the running metal strip to thereby form on the running metal strip a coating with a thickness of 0.3 µm or more; cooling the running metal strip having the coating formed thereon until the surface temperature becomes 80°C or lower; and winding the running metal strip which has been cooled after forming the coating, in which a ratio of an acid-modified polypropylene to a total resin mass of the coating is 40 mass% or more.
[2] The method for producing a coated metal strip according to [1], in which the coating material further contains an oxide or a fluoride of a metal selected from the group consisting of Ti, Zr, V, Mo, and W, or any combination thereof.
[3] The method for producing a coated metal strip according to [1] or [2], in which the coating material further contains one or more resins exclusive of the acid-modified polypropylene, in which the resin is selected from the group consisting of an acrylic resin, an acrylic-styrene resin, an epoxy resin, a vinyl acetate resin, ethylene-vinyl acetate copolymer resin, a fluororesin, a urethane resin, a polyolefin resin, a phenol resin, a polyester resin, a copolymer of the above resins, and a modified product of the above resins.

### Advantageous Effects of Invention

The present invention enables a production of a coated metal strip which is excellent in adhesion between the metal strip and the coating and is less likely to suffer blocking, and which can be joined strongly to a molded article of a thermoplastic resin composition.

### Brief Description of Drawings

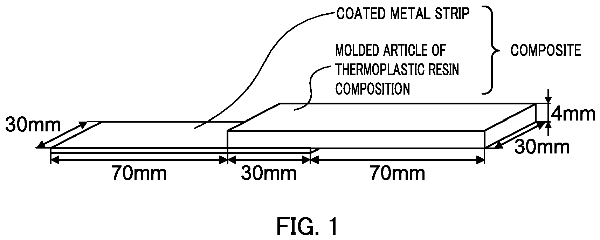

FIG. 1 schematically illustrates the configuration of a composite used for evaluating the joining strength between a coated metal strip and a molded article of a thermoplastic resin composition.

### Description of Embodiments

The method for producing a coated metal strip according to the present invention is a method for producing a coated metal strip having thereon a coating to be joined to a molded article of a thermoplastic resin composition, which includes steps of 1) providing a metal strip and running the metal strip, 2) applying a coating material onto the running metal strip, 3) baking the applied coating material to form a coating, and 4) cooling the metal strip having the coating formed thereon (coated metal strip), and winding the cooled metal strip. Typically, these steps are performed continuously.

Hereinafter, each step of the method for producing a coated metal strip according to the present invention will be described.

### 1) First Step

In the first step, a metal strip is provided and run. For example, a reel on which a metal strip is wound into a coil form is placed in a continuous coating line (CCL). Subsequently, the continuous coating line is operated to send out and run the metal strip. The distance and speed for running the metal strip are not particularly limited, and can be set appropriately in accordance with each step described below. In the fourth step described below, the metal strip is wound again into a coil form in the continuous coating line.

### [Metal Strip]

The metal strip is a coating-base material in which its length, relative to its width, is long such that the metal strip is capable of winding into a coil form. Metal species of the metal strip is not particularly limited. Examples of the metal strips include cold-rolled steel strips, zinc-coated steel strips, Zn-Al alloy-coated steel strips, Zn-Al-Mg alloy-coated steel strips, Zn-Al-Mg-Si alloy-coated steel strips, aluminum-coated steel strips, stainless steel strips (including austenitic stainless steel strips, martensitic stainless steel strips, ferritic stainless steel strips, and ferrite-martensite duplex-phase stainless steel strips), aluminum strips, aluminum alloy strips, copper strips, and copper alloy strips.

### [Pretreatment]

Prior to the second step, the metal strip may be subjected to a pretreatment. For example, the metal strip may be subjected to degreasing or pickling as a pretreatment. Such a pretreatment can be performed by an appropriate conventional method in accordance with the metal species of the metal strip. For example, degreasing can be performed by subjecting the running metal strip to spraying of an alkaline treatment liquid, dipping in an alkaline treatment liquid, or an electrolytic treatment.

### [Chemical Conversion Treatment]

Prior to the second step, a chemical conversion treatment liquid may be applied onto the running metal strip surface, followed by drying, to thereby form a chemical conversion film on the metal strip. The chemical conversion film is disposed on the metal strip surface, and improves adhesion between the metal strip and the coating, and corrosion resistance of the metal strip.

The type of chemical conversion treatment for forming the chemical conversion film is not particularly limited. Examples of the chemical conversion treatments include chromate conversion treatment, chromium-free conversion treatment, and phosphating treatment. The coverage of the chemical conversion film formed by the chemical conversion treatment is not particularly limited as long as the coverage falls within a range effective for improving the adhesion and corrosion resistance of the coating. For example, the coverage of a chromate film can be adjusted so that the coverage in terms of the total amount of Cr becomes 5 to 100 mg/m². The coverage of a chromium-free film can be adjusted so that the coverage falls within a range of 10 to 500 mg/m² for a Ti-Mo composite film, and the coverage in terms of fluorine or in terms of total metal elements falls within a range of 3 to 100 mg/m² for a fluoro acid film. The coverage of the phosphate film can be adjusted to 0.1 to 5 g/m².

The applied amount of the chemical conversion treatment liquid is not particularly limited as long as a desired amount of the chemical conversion film can be adhered to the metal strip, and the applied amount can be appropriately adjusted, in accordance with the viscosity of the chemical conversion treatment liquid or a method for applying the chemical conversion treatment liquid.

The method for applying the chemical conversion treatment liquid is not particularly limited and can be appropriately selected from methods known in the art. Examples of the methods for the application include roll coating, curtain flow, spraying, and dipping methods.

The conditions for drying the chemical conversion treatment liquid may be set appropriately in accordance with, e.g., the composition of the chemical conversion treatment liquid. For example, a metal strip having the chemical conversion treatment liquid applied thereon is continuously conveyed into a drying oven without washing with water, and heated so that the end-point temperature of the metal strip falls within a range of 50 to 250°C. By such a method, a uniform chemical conversion film can be formed on the metal strip surface.

### 2) Second Step

In the second step, a predetermined coating material is applied onto a running metal strip under predetermined conditions.

### [Coating Material]

The coating material contains an acid-modified polypropylene as an essential component, and may contain a resin other than an acid-modified polypropylene as an optional component. The coating material may further contain an additive, such as a below-mentioned metal compound and a crosslinking agent as necessary. Further, the coating material may contain a solvent as necessary. The type of the solvent is not particularly limited as long as the solvent is a liquid which is capable of uniformly dissolving or dispersing various components of the coating material, and which evaporates during the formation of the coating. The solvent is preferably water, and in this case, the coating material is an aqueous emulsion.

### (Acid-modified Polypropylene)

An aqueous emulsion of an acid-modified polypropylene can be prepared by acid-modification of polypropylene, followed by addition and dispersion of the acid-modified polypropylene in water. Various surfactants may be added as emulsifiers to the aqueous emulsion of an acid-modified polypropylene.

Examples of the types of the surfactants include a nonionic surfactant, an anionic surfactant, and a cationic surfactant. Such surfactants may be used alone or in combination. The amount of a surfactant is preferably in a range of from 1 to 100 parts by mass, relative to 100 parts by mass of an acid-modified polypropylene. A polymeric emulsifier or a dispersant may be used as an alternative for such a surfactant.

As the stereoregularity of polypropylene, isotactic, atactic, syndiotactic, hemi-isotactic, and stereotactic are known. The stereoregularity of polypropylene is preferably isotactic in view of durability and mechanical properties, such as rigidity and impact strength, which are required after molding.

The weight-average molecular weight of polypropylene is preferably in a range of from 1,000 to 300,000, more preferably from 5,000 to 100,000. When the weight-average molecular weight of polypropylene is less than 1,000, there is a danger of lowering of the coating strength. In contrast, when the weight-average molecular weight is more than 300,000, during the below-mentioned acid-modification step, the viscosity of the polypropylene becomes increased and may make the process difficult.

Acid modification of polypropylene can be performed, for example, by dissolving polypropylene in toluene or xylene, and reacting the resultant in the presence of a radical initiator with an α,β-unsaturated carboxylic acid, an α,β-unsaturated carboxylic acid anhydride, a compound having at least one double bond per molecule, or a combination thereof. Alternatively, an acid modification of polypropylene can be performed by reacting polypropylene with an α,β-unsaturated carboxylic acid, an α,β-unsaturated carboxylic acid anhydride, a compound having at least one double bond per molecule, or a combination thereof, in the presence or absence of a radical initiator, under conditions such that the temperature of the polypropylene is elevated to a temperature equal to or higher than the softening temperature or melting temperature of the polypropylene.

Examples of the radical initiators include peroxides, such as di-tert-butyl peroxyphthalate, tert-butyl hydroperoxide, dicumyl peroxide, benzoyl peroxide, tert-butyl peroxybenzoate, tert-butyl peroxyethylhexanoate, tert-butyl peroxypivalate, methyl ethyl ketone peroxide, and di-tert-butyl peroxide; and azonitriles, such as azobisisoburtyronitrile and azobisisopropionitrile. The amount of a radical initiator is preferably in a range of from 0.1 to 50 parts by mass, more preferably from 0.5 to 30 parts by mass, relative to 100 parts by mass of polypropylene.

Examples of α,β-unsaturated carboxylic acids or acid anhydrides thereof include maleic acid, maleic anhydride, fumaric acid, citraconic acid, citraconic anhydride, mesaconic acid, itaconic acid, itaconic anhydride, aconitic acid, and aconitic anhydride. These compounds may be used alone or in combination. From the viewpoint of improving physical properties of a coating, use of two or more compounds in combination is preferred.

Examples of the compounds having at least one double bond per molecule include (meth)acrylic acid monomers, such as methyl (meth)acrylate, ethyl (meth)acrylate, propyl (meth)acrylate, butyl (meth)acrylate, 2-hydroxyethyl (meth)acrylate, 2-hydroxypropyl (meth)acrylate, 4-hydroxybutyl (meth)acrylate, cyclohexyl (meth)acrylate, tetrahydrofurfuryl (meth)acrylate, isobornyl (meth)acrylate, benzyl (meth)acrylate, 2-hydroxybutyl (meth)acrylate, glycidyl (meth)acrylate, (meth)acrylic acid, (di)ethylene glycol di(meth)acrylate, 1,4-butanediol di(meth)acrylate, 1,6-hexanediol di(meth)acrylate, trimethylolpropane tri(meth)acrylate, glycerol di(meth)acrylate, 2-ehtylhexyl (meth)acrylate, lauryl (meth)acrylate, stearyl (meth)acrylate and acrylamide; and styrene monomers, such as styrene, α-methylstyrene, (para)methylstyrene, and chloromethylstyrene. In addition to these compounds, vinyl monomers, such as divinylbenzene, vinyl acetate, and a vinyl ester of versatic acid, may be used.

Such compounds having double bonds may be used alone or in combination. The amount of such compounds having double bonds is preferably in a range of from 0.1 to 50 parts by mass, more preferably from 0.5 to 30 parts by mass, relative to 100 parts by mass of polypropylene.

There is no particular limitation with respect to the acid value of an acid-modified polypropylene, but it is preferably in a range of from 1 to 500 mg·KOH/g. This is because, when the acid value is within the above range, a compound per se having a double bond functions as a surfactant by neutralizing the acid-modified polypropylene during emulsification. When the modification reaction of polypropylene is performed in an organic solvent, such as toluene and/or xylene, or in a non-organic solvent, such as an aqueous solvent (non-homogenous dispersion system), nitrogen purge should be performed satisfactorily. The acid-modified polypropylene can be prepared in accordance with the above procedure.

An aqueous emulsion of the acid-modified polypropylene can be prepared by dispersing the thus produced acid-modified polypropylene in water. A surfactant may or may not be added to the prepared emulsion. There is no particular limitation with respect to the type of the surfactant. Examples of the types of the surfactants include a nonionic surfactant, an anionic surfactant, and a cationic surfactant. These surfactants may be used alone or in combination. The amount of the surfactant is preferably in a range of from 1 to 100 parts by mass relative to 100 parts by mass of an acid-modified polypropylene. A polymer emulsifier or a dispersant may be used as an alternative for such a surfactant.

A coating material contains 40 mass% or more of an acid-modified polypropylene based on the total mass of resins in the coating material. When the content of an acid-modified polypropylene is less than 40 mass%, the compatibility between a coating and a molded article of a thermoplastic resin composition becomes lowered. As a result, a coated shaped metal material and a molded article of a thermoplastic resin composition may suffer from lack of joining strength therebetween. The "total mass of resins" used herein indicates the total mass of the acid-modified polypropylene and a resin exclusive of the acid-modified polypropylene. The amount of the acid-modified polypropylene in the coating material can be adjusted by mixing an aqueous emulsion of an acid-modified polypropylene and an aqueous emulsion of a resin exclusive of an acid-modified polypropylene.

### (Resin Exclusive of Acid-modified Polypropylene)

An aqueous emulsion of a resin exclusive of the acid-modified polypropylene can be prepared by dispersing a predetermined resin in water. The resin exclusive of the acid-modified polypropylene improves adhesion of a coating to a metal strip to a further extent. Although there is no particular limitation to the type of the resin exclusive of the acid-modified polypropylene, a resin having a polar group is preferred from a viewpoint of further improvement in adhesion between the coating and the metal strip. Examples of the resins exclusive of the acid-modified polypropylene include an acrylic resin, an acrylic-styrene resin, an epoxy resin, a vinyl acetate resin, ethylene-vinyl acetate copolymer resin (EVA), a fluororesin, a urethane resin, a phenol resin, a polyester resin, a polyolefin resin, a copolymer of the above resins, and a modified product of the above resins. These resins may be used alone or in combination.

Examples of the epoxy resins include bisphenol A epoxy resin, bisphenol F epoxy resin, and bisphenol AD epoxy resin. Examples of the polyolefin resins include polyethylene resin and acid-unmodified polypropylene resin. Examples of the phenol resins include novolac resins and resol resins. The urethane resin can be obtained by copolymerizing a diol and a diisocyanate. Examples of the diols include bisphenol A, 1,6-hexanediol, and 1,5-pentanediol which are diols exclusive of polycarbonate diols. Examples of the diisocyanates include aromatic diisocyanates, aliphatic diisocyanates, and alicyclic diisocyanates.

### (Other Components)

As described above, the coating material may further contain a metal compound, a crosslinking agent, a corrosion inhibitor, a lubricant, a stabilizer, an antifoaming agent, or the like.

Preferably, the coating material further contains an oxide or a fluoride of a metal (valve metal) selected from the group consisting of Ti, Zr, V, Mo, and W, or any combination thereof. Dispersion of the metal compound(s) in the coating can improve the corrosion resistance of a coated metal strip to a further extent. Particularly, the fluorides of these metals are expected to suppress the corrosion at a coating defect area due to their self-repairing effect.

The coating material may further contain a soluble metal phosphate or complex phosphate, or a poorly soluble metal phosphate or complex phosphate. The soluble metal phosphate and complex phosphate further improve the corrosion resistance of the coated metal strip by complementing the self-repairing effect of the above-mentioned metal (valve metal) fluoride(s). The poorly soluble metal phosphate and complex phosphate improve the coating strength by being dispersed in the coating. The soluble metal phosphate or complex phosphate, or the poorly soluble metal phosphate or complex phosphate is, for example, a salt of Al, Ti, Zr, Hf, Zn or the like.

A crosslinking agent improves the strength of a coating by crosslinking the acid-modified polypropylene. There is no particular limitation to the type of the crosslinking agent. Examples of the crosslinking agents include isocyanate-, epoxy-, oxazoline-, or melamine-based crosslinking agents and crosslinking agents having metal salts. The content of the crosslinking agent in the coating material is preferably in a range of from 1 to 30 parts by mass, relative to 100 parts by mass of the acid-modified polypropylene. The crosslinking agent in an amount of less than 1 part by mass may be incapable of satisfactorily crosslinking the acid-modified polypropylene. In contrast, the crosslinking agent in an amount of more than 30 parts by mass may cause the coating formation difficult due to increased viscosity or solidification of the coating material.

The coating material may further contain, as necessary, an additive, such as an etching agent, an inorganic compound, a lubricant, a color pigment, a dye or the like.

An etching agent improves the adhesion of the coating to the metal strip by activating the surface of the metal strip. Examples of the etching agents include fluorides such as hydrofluoric acid, ammonium fluoride, hexafluorozirconic acid, and hexafluorotitanic acid.

The inorganic compound improves water resistance by densifying the coating. Examples of the inorganic compounds include sols of inorganic oxides such as silica, alumina, and zirconia; and phosphates such as sodium phosphate, calcium phosphate, manganese phosphate, and magnesium phosphate.

A lubricant can suppress the occurrence of galling on the surface of the coated metal strip. Examples of the lubricants include organic lubricants such as fluorine-based lubricants, polyethylene-based lubricants and styrene-based lubricants; and inorganic lubricants, such as molybdenum disulfide and talc.

A color pigment and dye impart a predetermined color tone to the coating. Examples of the color pigments include inorganic pigments and organic pigments. Examples of the dyes include organic dyes.

The ratio of a nonvolatile component in the coating material is 5 mass% or more. When the ratio of the nonvolatile component in the coating material is less than 5 mass%, formation of a coating with a desired thickness (0.3 µm or more) becomes difficult, and as a result, the joinability between the metal strip and a molded article of a thermoplastic resin composition may become unsatisfactory. In view of the above, the ratio of the nonvolatile component in the coating material is preferably 5 mass% or more, and more preferably 8 mass% or more.

### [Method for Applying Coating Material]

One of the features of the method for producing a coated metal strip according to the present invention is application of a coating material onto a running metal strip in a state where the surface temperature of the metal strip is 60°C or lower. When a coating material is applied onto a metal strip in a state where the surface temperature of the metal strip is more than 60°C, the coating material applied onto the metal strip solidifies quickly, thereby preventing the formation of a normal coating with high adhesion. The method for adjusting the surface temperature of a metal strip to 60°C or lower is not particularly limited. For example, the metal strip may be cooled until the surface temperature thereof becomes 60°C or lower by means of water cooling, radiation cooling, air cooling or the like. The length of the running line, the running velocity of the metal strip, or the like is appropriately adjusted. In view of the above, the surface temperature of the metal strip during the application of a coating material is preferably 60°C or lower, and more preferably 40°C or lower.

The amount of the coating material applied onto the metal strip is appropriately adjusted, in accordance with the viscosity of the coating material, a method for applying the coating material or the like, so that the thickness of the coating becomes 0.3 µm or more. When the thickness of a coating is less than 0.3 µm, uniform coverage of the metal strip surface with the coating becomes difficult. As a result, upon joining of the metal strip and a molded article of a thermoplastic resin composition, the adhesive strength of the molded article of a thermoplastic resin composition to the metal strip may become unsatisfactory due to fine voids formed between the metal strip and the molded article of a thermoplastic resin composition. On the other hand, there is no particular limitation with respect to the upper limit of the thickness of the coating, and it is preferably 20 µm or less. No remarkable improvement is recognized even when the thickness of the coating is more than 20 µm, and there are disadvantages in terms of production and cost. The method for measuring the thickness of the coating is not particularly limited and can be appropriately selected from methods known in the art. Examples of the methods for measuring the thickness of the coating include gravimetric method, x-ray fluorescence method and methods using an infrared thickness meter.

The method for applying the coating material is not particularly limited and can be appropriately selected from methods known in the art. Examples of the methods for applying the coating material include a roll coating method, a curtain flow method, a spraying method, and a dipping method.

### 3) Third Step

In the third step, the coating material applied in the second step is baked to form a coating on a running metal strip.

The baking temperature of the coating material is in a range of from 80 to 250°C. When the baking temperature is lower than 80°C, the adhesion between the metal strip and the coating, and the joinability between the coating and a molded article of a thermoplastic resin composition decrease due to residual moisture in the coating, incomplete fusion among emulsion particles in the coating material, or the like. In view of the above, the baking temperature of the coating material is preferably 80°C or higher, and more preferably 100°C or higher. On the other hand, when the baking temperature is higher than 250°C, occurrence of excess polymerization of the components in the coating may lower the joinability between the coating and a molded article of a thermoplastic resin composition. In view of the above, the baking temperature of the coating material is preferably 250°C or lower, and more preferably 230°C or lower.

The method for baking the coating material is not particularly limited, and the metal strip having a coating material thereon may be heated using a dryer or an oven. For example, when using a dryer, hot air may be blown to the coating material. The method for heating by the oven is not particularly limited and can be appropriately selected from methods known in the art. Examples of the methods for heating by the oven include methods using a hot air heating system, a far-infrared system, a near-infrared system, a high frequency heating system and a resistance heating element system.

The baking time of the coating material is not particularly limited as long as a coating having high adhesion to a metal strip can be formed. The baking time of a coating material can be appropriately adjusted in accordance with the baking temperature, the baking method and the like.

### 4) Fourth Step

In the fourth step, the metal strip (coated metal strip) having a coating formed thereon is cooled and wound into a coil form.

One of the features of the method for producing a coated metal strip according to the present invention is that, during the winding of the coated metal strip, the surface temperature of the coated metal strip is at 80°C or lower. When a coated metal strip is wound while its surface temperature is more than 80°C, adjacent coated metal strips in the wound state may suffer adhesion therebetween (blocking). In view of the above, the surface temperature of the metal strip during the winding is preferably 80°C or lower, and more preferably 60°C or lower.

The temperature of the coated metal strip immediately after the baking of the coating material in the third step is 80°C or higher, and therefore, in the fourth step, the coated metal strip is cooled first until the surface temperature becomes 80°C or lower. The method for cooling the coated metal strip is not particularly limited, and the metal strip can be cooled, for example, by water cooling, air cooling, or radiation cooling. For example, water cooling is performed by dipping the coated metal strip in water. Air cooling is performed by blowing cold air to the coated metal strip. The coated metal strip cooled to 80°C or lower is wound on a reel.

As described above, a coated metal strip which is excellent in adhesion between a metal strip and a coating and which is less likely to suffer blocking can be produced by adjusting the temperature of the metal strip during the application of a coating material and the temperature of the coated metal strip during the winding each to fall within a predetermined temperature range.

In the above embodiment, described is a method for producing a coated metal strip having a coating formed on one surface thereof. However, in the method of the present invention for producing a coated metal strip, based on the use of the coated metal strip, a coating may be formed on each of the two surfaces of a metal strip. For example, by using a 2-coat 2-bake type continuous coating line (CCL), a coating may be formed on one surface of a metal strip by using a first coater, and then, another coating may be further formed on the other surface of the metal strip by using a second coater. In this case, a molded article of a thermoplastic resin composition can be joined to both surfaces of the coated metal strip.

There is no particular limitation to the types of thermoplastic resins constituting a molded article of a thermoplastic resin composition, which is to be joined to the coated metal strip produced by the above production method. Examples of the thermoplastic resin compositions include an amorphous resin composition, such as a polyvinyl chloride (PVC)-based resin composition, a methacrylic acid (EMMA)-based resin composition; a crystalline resin composition, such as a polyethylene (PE)-based resin composition, a polypropylene (PP)-based resin composition, and a polyacetal (POM)-based resin composition; and any combination thereof. Further, the shape of the molded article of a thermoplastic resin composition is not particularly limited, and may be appropriately selected in accordance with its use.

Hereinafter, the method for producing a coated metal strip according to the present invention will be described in detail with reference to Examples. However, the present invention is not intended to be limited by these Examples.

### Examples

### 1. Production of Coated Metal Strip

### (1) Preparation of Metal Strip

Two types of metal strips, namely a stainless steel strip and a molten Zn-Al-Mg alloy-coated steel strip, were prepared as coating-base materials for coated metal strips.

### A. Stainless Steel Strip

A steel strips composed of SUS430 with No.4 finish, having a thickness of 0.8 mm, was provided as the stainless steel strip.

### B. Molten Zn-Al-Mg Alloy-coated Steel Strip

A coated steel strip having a coating of molten Zn - 6 mass% Al - 3 mass% Mg alloy with a coating coverage of 45 g/m² per surface was provided as the molten Zn-Al-Mg alloy-coated steel strip. The base steel strip was a cold-rolled steel strip (SPCC) having a thickness of 0.8 mm.

### (2) Production of Coating Material

Various coating materials each containing 4 to 30 mass% of a nonvolatile component were individually prepared by adding an acid-modified polypropylene (PP), a resin exclusive of an acid-modified polypropylene, and various additives to water. Each coating material was supplemented with 0.5 mass% of ammonium fluoride (Morita Chemical Industries Co., Ltd.) as an etching agent, 2 mass% of colloidal silica (Nissan Chemical Industries, Ltd.) as an inorganic compound, and 0.5 mass% of phosphoric acid (Kishida Chemical Co., Ltd.)

An acid-modified polypropylene with an acid value of 2.0 mg·KOH/g (HARDLEN EW-5303; Toyobo Co. Ltd.) was used as the acid-modified polypropylene.

A polyurethane resin (HUX-232; dry solids content 30 mass%, ADEKA Corporation), an epoxy resin (ADEKA Resin EM-0434AN; dry solids content 30 mass%, ADEKA Corporation), and a phenol resin (TAMANOL E-100; dry solids content 52 mass%, Arakawa Chemical Industries, Ltd.) were used as the resins exclusive of the acid-modified polypropylene (see Table 1).

### (3) Formation of Coating and Winding of Coated Metal Strip

The following steps were performed by means of a continuous coating line while running the metal strip. Each metal strip was degreased by dipping into an aqueous alkaline degreasing solution (SD-270; Nippon Paint Co., Ltd.), pH 12, at a solution temperature of 60°C. Subsequently, the degreased metal strip was passed through a water spray-washing zone to remove alkaline components on the surface of the metal strip. Thus washed metal strip was passed through a hot air-dryer zone to dry the metal strip and, then subjected to radiation cooling as necessary, thereby adjusting the surface temperature of the metal strip to a predetermined temperature within a range of 30 to 70°C.

A coating material was applied, using a roll coater, onto both surfaces of the metal strip in which the surface temperature has been adjusted. Subsequently, without washing with water, the metal strip having the coating material applied thereon was passed through a hot air-dryer zone to bake the coating material under conditions where the surface temperature (baking temperature) of the metal strip becomes to 60 to 260°C.

The coated metal strip was cooled using a blower until the surface temperature became 30 to 90°C, and subsequently wound into a coil form using a coil winding device.

Regarding each coated metal strip produced by the series of the above-mentioned steps, the type of the coating-base material, the content of the acid-modified polypropylene, the content of the resin exclusive of the acid-modified polypropylene, the content of a nonvolatile component in the coating material, the temperature of the metal strip immediately before applying the coating material, the baking temperature, the winding temperature, the thickness of the coating, and the category are shown in Table 1.

**[Table 1]**

| Coated Metal Strip No. | Coating -Base Material | Acid-Modified PP (mass%) | Resin Exclusive of Acid-modified PP (mass%) | | | Nonvolatile Component (mass%) | Metal Strip Temperature Immediately before Application (°C) | Baking Temperature (°C) | Winding Temperature (°C) | Coating Thickness (µm) | Category |
|---|---|---|---|---|---|---|---|---|---|---|---|
| | | | a | b | c | | | | | | |
| 1 | A | 40 | 60 | - | - | 20 | 30 | 100 | 30 | 1.6 | Ex. 1 |
| 2 | B | 80 | - | 20 | - | 20 | 40 | 140 | 30 | 0.9 | Ex. 2 |
| 3 | B | 60 | 20 | 10 | 10 | 5 | 50 | 160 | 40 | 0.8 | Ex. 3 |
| 4 | A | 60 | 10 | 20 | 10 | 20 | 60 | 180 | 50 | 2.5 | Ex. 4 |
| 5 | A | 60 | 10 | 10 | 20 | 20 | 40 | 80 | 60 | 3.3 | Ex. 5 |
| 6 | A | 60 | 40 | - | - | 20 | 40 | 200 | 70 | 1.0 | Ex. 6 |
| 7 | A | 60 | 20 | 20 | - | 20 | 50 | 250 | 80 | 2.5 | Ex. 7 |
| 8 | A | 60 | 40 | - | - | 20 | 40 | 150 | 60 | 0.3 | Ex. 8 |
| 9 | B | 50 | 20 | 15 | 15 | 30 | 40 | 160 | 60 | 1.5 | Ex. 9 |
| 10 | B | 70 | - | 20 | 10 | 20 | 30 | 150 | 50 | 2.4 | Ex. 10 |
| 11 | B | 60 | 40 | - | - | 4 | 50 | 150 | 30 | 0.2 | Comp. Ex. 1 |
| 12 | B | 30 | 10 | 30 | 30 | 10 | 40 | 140 | 40 | 1.0 | Comp. Ex. 2 |
| 13 | B | 50 | 50 | - | - | 20 | 70 | 140 | 50 | 4.0 | Comp. Ex. 3 |
| 14 | A | 40 | 60 | - | - | 20 | 60 | 60 | 60 | 3.2 | Comp. Ex. 4 |
| 15 | B | 60 | - | 20 | 20 | 20 | 50 | 260 | 60 | 1.8 | Comp. Ex. 5 |
| 16 | B | 60 | - | 40 | - | 20 | 40 | 140 | 90 | 2.0 | Comp. Ex. 6 |
| 17 | B | 80 | 20 | - | - | 20 | 30 | 150 | 60 | 0.2 | Comp. Ex. 7 |

| | | | | | | | | | | | |
|---|---|---|---|---|---|---|---|---|---|---|---|
| • Coating-Base Material A: Stainless Steel Strip (SUS430) B: Molten Zn - 6 mass% A1 - 3 mass% Mg Alloy-coated Steel Strip • Resin Exclusive of Acid-Modified Polypropylene (PP) a: Polyurethane Resin (HUX-232) b: Epoxy Resin (ADEKA Resin EM-0434AN) c: Phenol Resin (TAMANOL E-100) | | | | | | | | | | | |

### 2. Evaluation of Coated Metal Strip

### (1) Evaluation for Blocking Resistance

Each coated metal strip wound into a coil form was passed through a recoiling line to rewind the coated metal strip at a line speed of 100 m/min. During the rewinding, the blocking resistance of each coated metal strip was evaluated based on the sticking state of adjacent coated metal strips. Each coated metal strip was evaluated as "Good" when no sticking was observed, and as "Poor" when sticking was observed.

### (2) Evaluations for Adhesion of Coating and Joinability to Molded Article of Thermoplastic Resin Composition

A composite of the coated metal strip and a molded article of a thermoplastic resin composition was prepared using each coated metal strip, and used for evaluating the adhesion of the coating and the joinability to the molded article of a thermoplastic resin.

A polypropylene (PP)-based resin composition (Prime Polypro R-350G; melting temperature: 150°C, Prime Polymer Co., Ltd.) was provided as a thermoplastic resin composition. The thermoplastic resin composition contains 30 mass% of glass fibers as a filler.

FIG. 1 schematically illustrates a composite for evaluation. As shown in FIG. 1, a test piece having a width of 30 mm and a length of 100 mm was cut out from each coated metal strip. The test piece was inserted into an injection molding die, and the thermoplastic resin composition in a molten state was injected into a cavity of the injection molding die. The shape of the cavity is 30 mm in width, 100 mm in length and 4 mm in thickness. The thermoplastic resin composition is in contact with the coated metal strip at one of the regions having a width of 30 mm and a length of 30 mm. The injection of the thermoplastic resin composition into the cavity was followed by cooling and solidification, thereby obtaining a composite for evaluation.

Regarding each composite, the coated metal strip and the molded article of the thermoplastic resin composition were pulled in opposite directions on the same plane at a rate of 100 mm/min, and the strength at breakage (peel strength) was measured. In this instance, the broken portion was observed to see whether the peeling occurred between the metal strip and the coating, or between the coating and the molded article. The composite was evaluated as "Poor" when the peel strength was less than 1.0 kN, as "Fair" when the peel strength was 1.0 kN or more and less than 1.5 kN, as "Good" when the peel strength was 1.5 kN or more and less than 2.0 kN, and as "Excellent" when the peel strength was 2.0 kN or more. A composite having a peel strength of less than 1.0 kN (Poor) was found disqualified due to its inability to withstand practical use.

### (3) Results

Regarding each coated metal strip, the category, the coated metal strip number, the evaluation result for the blocking resistance, the evaluation result for the peel strength and the position of peeling are shown in Table 2.

**[Table 2]**

| Category | Coated Metal Strip No. | Blocking Resistance | Peel Strength (kN) | Position of Peeling |
|---|---|---|---|---|
| Ex. 1 | 1 | Good | 1.6 (Good) | Internal Breakage of Molded Article Breakage at Interface between Coating and Molded Article |
| Ex. 2 | 2 | Good | 1.5 (Good) | Internal Breakage of Molded Article Breakage at Interface between Coating and Molded Article |
| Ex. 3 | 3 | Good | 1.8 (Good) | Internal Breakage of Molded Article Breakage at Interface between Coating and Molded Article |
| Ex. 4 | 4 | Good | 2.7 (Excellent) | Internal Breakage of Molded Article Breakage at Interface between Coating and Molded Article |
| Ex. 5 | 5 | Good | 3.1 (Excellent) | Internal Breakage of Molded Article Breakage at Interface between Coating and Molded Article |
| Ex. 6 | 6 | Good | 1.5 (Good) | Internal Breakage of Molded Article Breakage at Interface between Coating and Molded Article |
| Ex. 7 | 7 | Good | 2.4 (Excellent) | Internal Breakage of Molded Article Breakage at Interface between Coating and Molded Article |
| Ex. 8 | 8 | Good | 1.1 (Fair) | Internal Breakage of Molded Article Breakage at Interface between Coating and Molded Article |
| Ex. 9 | 9 | Good | 2.1 (Excellent) | Internal Breakage of Molded Article Breakage at Interface between Coating and Molded Article |
| Ex. 10 | 10 | Good | 2.2 (Excellent) | Internal Breakage of Molded Article Breakage at Interface between Coating and Molded Article |
| Comp. Ex. 1 | 11 | Good | 0.8 (Poor) | Unconfirmable |
| Comp. Ex. 2 | 12 | Good | 0.6 (Poor) | Breakage at Interface between Coating and Molded Article |
| Comp. Ex. 3 | 13 | Good | 0.6 (Poor) | Breakage at Interface between Metal Strip and Coating |
| Comp. Ex. 4 | 14 | Good | 0.8 (Poor) | Breakage at Interface between Metal Strip and Coating Breakage at Interface between Coating and Molded Article |
| Comp. Ex. 5 | 15 | Good | 0.6 (Poor) | Breakage at Interface between Coating and Molded Article |
| Comp. Ex. 6 | 16 | Poor | 2.0 (Excellent) | Internal Breakage in Molded Article Breakage at Interface between Coating and Molded Article |
| Comp. Ex. 7 | 17 | Good | 0.8 (Poor) | Unconfirmable |

As shown in Table 2, the composite of Comparative Example 1 had unsatisfactory peel strength due to the coating material having a too low content of a nonvolatile component and being incapable of forming a thick coating. In addition, the position of peeling was unconfirmable due to unduly thin coating. The composite of Comparative Example 2 had unsatisfactory adhesion between the coating and the molded article due to the coating having a too low content of the acid-modified polypropylene. The composite of Comparative Example 3 had unsatisfactory adhesion between the metal strip and the coating due to the excessively high temperature employed during the application of the coating material onto the metal strip. The composite of Comparative Example 4 had unsatisfactory adhesion between the metal strip and the coating and also unsatisfactory joining strength between the coating and the molded article due to unduly low temperature employed for the baking of the coating material. The composite of Comparative Example 5 had unsatisfactory joining strength between the coating and the molded article due to the excessively high temperature employed for the baking of the coating material. The coated metal strip of Comparative Example 6 had unsatisfactory blocking resistance due to the excessively high temperature of the coated metal strip during the winding. The composite of Comparative Example 7 had unsatisfactory peel strength due to unduly thin coating. In addition, the position of peeling was unconfirmable due to unduly thin coating.

On the other hand, each of the coated metal strips of Examples 1 to 10 had excellent blocking resistance, together with excellent adhesion between the metal strip and the coating, and also excellent joining strength between the coating and the molded article. Most of the positions of peeling were inside the molded articles (internal breakage), but in some cases, peeling occurred at the interface between the coating and the molded article.

As can be seen from the above results, the method for producing a coated metal strip according to the present invention is capable of providing a coated metal strip which is excellent in the adhesion between a metal strip and the coating and is less likely to suffer blocking, and in which the coating can be joined strongly to a molded article of a thermoplastic resin composition.

### Industrial Applicability

The coated metal strip produced by the method for producing a coated metal strip according to the present invention is excellent in joinability to a molded article of a thermoplastic resin composition, and therefore, is suitably used in the fields of, e.g., various electronic devices, consumer electronics, medical equipment, automobile bodies, car accessories, and constructional materials.

## Claims

1. A method for producing a coated metal strip which is a metal strip having a coating formed on at least one surface thereof, the coating being a part to be joined to a molded article of a thermoplastic resin composition, the method comprising:
running a metal strip;
applying onto the running metal strip a coating material containing an acid-modified polypropylene, the coating material containing 5 mass% or more of a nonvolatile component, wherein the coating material is applied in a state where a surface temperature of the running metal strip is 60°C or lower;
baking, at a temperature of from 80 to 250°C, the coating material applied onto the running metal strip to thereby form on the running metal strip a coating with a thickness of 0.3 µm or more;
cooling the running metal strip having the coating formed thereon until the surface temperature becomes 80°C or lower; and
winding the running metal strip which has been cooled after forming the coating,
wherein a ratio of an acid-modified polypropylene to a total resin mass of the coating is 40 mass% or more.

2. The method for producing a coated metal strip according to claim 1, wherein the coating material further contains an oxide or a fluoride of a metal selected from the group consisting of Ti, Zr, V, Mo, and W, or any combination thereof.

3. The method for producing a coated metal strip according to claim 1 or 2, wherein the coating material further contains one or more resins exclusive of the acid-modified polypropylene, wherein the resin is selected from the group consisting of an acrylic resin, an acrylic-styrene resin, an epoxy resin, a vinyl acetate resin, ethylene-vinyl acetate copolymer resin, a fluororesin, a urethane resin, a polyolefin resin, a phenol resin, a polyester resin, a copolymer of the above resins, and a modified product of the above resins.

## Patentansprüche

1. Verfahren zum Herstellen eines beschichteten Metallstreifens mit einer Beschichtung, die auf mindestens einer Fläche davon ausgebildet ist, wobei die Beschichtung ein Teil ist, der mit einem Gussteil aus einer thermoplastischen Kunstharzzusammensetzung zu verbinden ist, wobei das Verfahren enthält:
Laufen lassen eines Metallstreifens;
Aufbringen auf den laufenden Metallstreifen eines Beschichtungsmaterials, das ein säuremodifiziertes Polypropylen enthält, wobei das Beschichtungsmaterial einen Massenanteil von 5 % oder mehr eines nichtflüchtigen Bestandteils enthält, wobei das Beschichtungsmaterial in einem Zustand aufgebracht wird, in dem eine Oberflächentemperatur des laufenden Metallstreifens 60 °C oder weniger beträgt;
Einbrennen bei einer Temperatur von 80 bis 250 °C, wobei das auf den laufenden Metallstreifen aufgebrachte Beschichtungsmaterial dadurch auf dem laufenden Metallstreifen eine Beschichtung mit einer Dicke von 0,3 µm oder mehr ausbildet;
Abkühlen des laufenden Metallstreifens mit der darauf ausgebildeten Beschichtung, bis die Oberflächentemperatur 80 °C oder niedriger wird; und
Aufwickeln des laufenden Metallstreifens, der nach dem Ausbilden der Beschichtung abgekühlt wurde,
wobei ein Massenverhältnis des säuremodifizierten Polypropylens zu einer Gesamt-Kunstharzmasse der Beschichtung 40 % oder mehr beträgt.

2. Verfahren zum Herstellen eines beschichteten Metallstreifens nach Anspruch 1, wobei das Beschichtungsmaterial weiter ein Oxid oder ein Fluorid eines Metalls enthält, gewählt aus der Gruppe, bestehend aus Ti, Zr, V, Mo und W oder einer beliebigen Kombination davon.

3. Verfahren zum Herstellen eines beschichteten Metallstreifens nach Anspruch 1 oder 2, wobei das Beschichtungsmaterial weiter ein oder mehrere Kunstharze außer dem säuremodifizierten Polypropylen enthält, wobei das Kunstharz gewählt ist aus der Gruppe, bestehend aus einem Acrylharz, einem Acryl-Styrol-Harz, einem Epoxidharz, einem Vinylazetatharz, einem Ethylen-Vinylazetat-Copolymerharz, einem Fluorkunststoff, einem Urethanharz, einem Polyolefinharz, einem Phenolharz, einem Polyesterharz, einem Copolymer der obigen Kunstharze und einem modifizierten Produkt der obigen Kunstharze.

## Revendications

1. Procédé pour produire une bande métallique revêtue qui est une bande métallique ayant un revêtement formé sur au moins une de ses surfaces, le revêtement étant une pièce devant être jointe à un article moulé d'une composition de résine thermoplastique, le procédé comprenant les étapes suivantes :
faire défiler une bande métallique ;
appliquer sur la bande métallique en défilement un matériau de revêtement contenant un polypropylène modifié à l'acide, le matériau de revêtement contenant 5 % en masse ou plus d'un composant non volatil, dans lequel le matériau de revêtement est appliqué dans un état dans lequel une température de surface de la bande métallique en défilement est de 60°C ou moins ;
cuire, à une température de 80 °C à 250°C, le matériau de revêtement appliqué sur la bande métallique en défilement pour former ainsi, sur la bande métallique en défilement, un revêtement d'une épaisseur de 0,3 µm ou plus ;
refroidir la bande métallique en défilement sur laquelle est formé le revêtement jusqu'à ce que la température de surface atteigne 80°C ou moins ; et
enrouler la bande métallique en défilement qui a été refroidie après la formation du revêtement, sachant qu'un rapport d'un polypropylène modifié à l'acide à une masse de résine totale du revêtement est de 40 % en masse ou plus.

2. Procédé pour produire une bande métallique revêtue selon la revendication 1, dans lequel le matériau de revêtement contient en outre un oxyde ou un fluorure d'un métal sélectionné dans le groupe constitué de Ti, Zr, V, Mo et W, ou toute combinaison de ces substances.

3. Procédé pour produire une bande métallique revêtue selon la revendication 1 ou 2, dans lequel le matériau de revêtement contient en outre une ou plusieurs résines, à l'exclusion du polypropylène modifié à l'acide, sachant que la résine est sélectionnée dans le groupe constitué par une résine acrylique, une résine acrylique-styrène, une résine époxyde, une résine d'acétate de vinyle, une résine copolymère éthylène-acétate de vinyle, une fluororésine, une résine uréthane, une résine de polyoléfine, une résine phénolique, une résine polyester, un copolymère des résines ci-dessus et un produit modifié des résines ci-dessus.
